# EUROPEAN PATENT APPLICATION

(11) **EP 4 625 288 A1**
(43) Date of publication of application: **01.10.2025**
(21) Application number: 25164701.2
(22) Date of filing: 19.03.2025
(51) Int. Cl.: G06Q 10/087, G06Q 30/0601, G07F 17/32

(54) **PRODUCT PROVIDING DEVICE, PROGRAM, AND PRODUCT PROVIDING SYSTEM**

(30) Priority: 30.03.2024 JP 2024058368
(71) Applicant: Bandai Co., Ltd., Tokyo 111-8081 (JP)
(72) Inventor: SAKASAI, Satoshi, 108-0073 Tokyo (JP); ENDO, Fumitaka, 108-0073 Tokyo (JP); WATANABE, Ryuya, 108-0073 Tokyo (JP); INOUE, Ryo, 108-0073 Tokyo (JP); KUROIWA, Miyu, 108-0073 Tokyo (JP); KIRYU, Konosuke, 108-0073 Tokyo (JP); HARAGUCHI, Kanoko, 108-0073 Tokyo (JP); MIYAMOTO, Chikako, 108-0075 Tokyo (JP)
(74) Representative: Studio Torta S.p.A.

(57) **Abstract**

A product providing device (1) capable of communicating with a terminal (2) of a user includes an inventory managing unit (116) that manages inventory statuses of products in a product group including a plurality of types of products, an option presenting unit (112) that presents to the terminal (2) a plurality of options associated with the product group in such a manner that the user is able to select an option, and a product providing unit (117) that provides, by a lottery, a product from the product group associated with the option. The option presenting unit (112) searches for, based on the inventory statuses of the products, an option that satisfies a search condition, and presents the option that satisfies the search condition.

## Description

### BACKGROUND OF THE INVENTION

### 1. Field of the Invention

The present invention relates to a product providing device, a program, and a product providing system.

### 2. Description of the Related Art

There have been product providing systems of an online lottery type (for example, Japanese Unexamined Patent Application Publication No. 2005-070937). In the case of such an online lottery system, a user cannot monopolize options, unlike options such as tangible lottery boxes or lottery tickets, and a system side needs to prevent a user from selecting an option such as a lottery box or a lottery ticket that has already been selected by another user.

In contrast, in the case of online, since many users participate, it is important to allow the users to be able to select options efficiently.

### SUMMARY OF THE INVENTION

Accordingly, it is an object of the present invention to provide a product providing device, a program, and a product providing system capable of providing a product efficiently.

According to an aspect of the present invention, a product providing device capable of communicating with a terminal of a user includes an inventory managing unit that manages inventory statuses of products in a product group including a plurality of types of products, an option presenting unit that presents to the terminal a plurality of options associated with the product group in such a manner that the user is able to select an option, and a product providing unit that provides, by a lottery, a product from the product group associated with the option. The option presenting unit searches for, based on the inventory statuses of the products, an option that satisfies a search condition, and presents the option that satisfies the search condition.

According to an aspect of the present invention, a program causes a computer to function as an inventory managing unit that manages inventory statuses of products in a product group including a plurality of types of products, an option presenting unit that presents to a terminal a plurality of options associated with the product group in such a manner that a user is able to select an option, and a product providing unit that provides, by a lottery, a product from the product group associated with the option. The option presenting unit searches for, based on the inventory statuses of the products, an option that satisfies a search condition, and presents the option that satisfies the search condition.

According to an aspect of the present invention, a product providing system including a terminal of a user and a product providing device includes an inventory managing unit that manages inventory statuses of products in a product group including a plurality of types of products, an option presenting unit that presents to the terminal a plurality of options associated with the product group in such a manner that the user is able to select an option; and a product providing unit that provides, by a lottery, a product from the product group associated with the option. The option presenting unit searches for, based on the inventory statuses of the products, an option that satisfies a search condition, and presents the option that satisfies the search condition.

According to the present invention, products can be provided efficiently.

### BRIEF DESCRIPTION OF THE DRAWINGS

Fig. 1 is a diagram for explaining a product providing method applied to an embodiment;
Fig. 2 is a schematic diagram of a product providing system according to an embodiment;
Fig. 3 is a diagram illustrating an example of the device configuration of a tablet computer as an example of a terminal;
Fig. 4 is a block diagram illustrating an example of the functional configuration of a product providing device;
Fig. 5 is a diagram illustrating an example of a lottery box database;
Fig. 6 is a diagram illustrating an example of lottery box images corresponding to inventory levels;
Fig. 7 is a diagram illustrating an example of a lottery box list screen presented by a first type option presenting unit;
Fig. 8 is a diagram illustrating an example of the lottery box list screen presented by the first type option presenting unit;
Fig. 9 is a diagram illustrating an example of product inventory detail information;
Fig. 10 is a diagram illustrating an example of a waiting-for-turn screen;
Fig. 11 is a diagram illustrating an example of a lottery ticket purchase confirmation screen;
Fig. 12 is a diagram illustrating an example of a number-of-lottery-tickets confirmation screen;
Fig. 13 is a diagram illustrating an example of lottery ticket databases;
Fig. 14 illustrates an example of a lottery ticket list screen for a selected lottery box displayed on the terminal;
Fig. 15 is a block diagram illustrating an example of the functional configuration of the terminal;
Figs. 16A and 16B are operation flowcharts of a first type option presenting process of the product providing device;
Fig. 17 illustrates an example of a purchasable title list screen presented on the terminal;
Fig. 18 is an operation flowchart of a second type option presenting process of the product providing device;
Fig. 19 illustrates an example of a lottery ticket open screen displayed on the terminal; and
Fig. 20 illustrates an example of a list of prizes displayed when a title is presented.

### DESCRIPTION OF THE PREFERRED EMBODIMENTS

### Embodiments of present invention

A first embodiment of the present invention will be described.

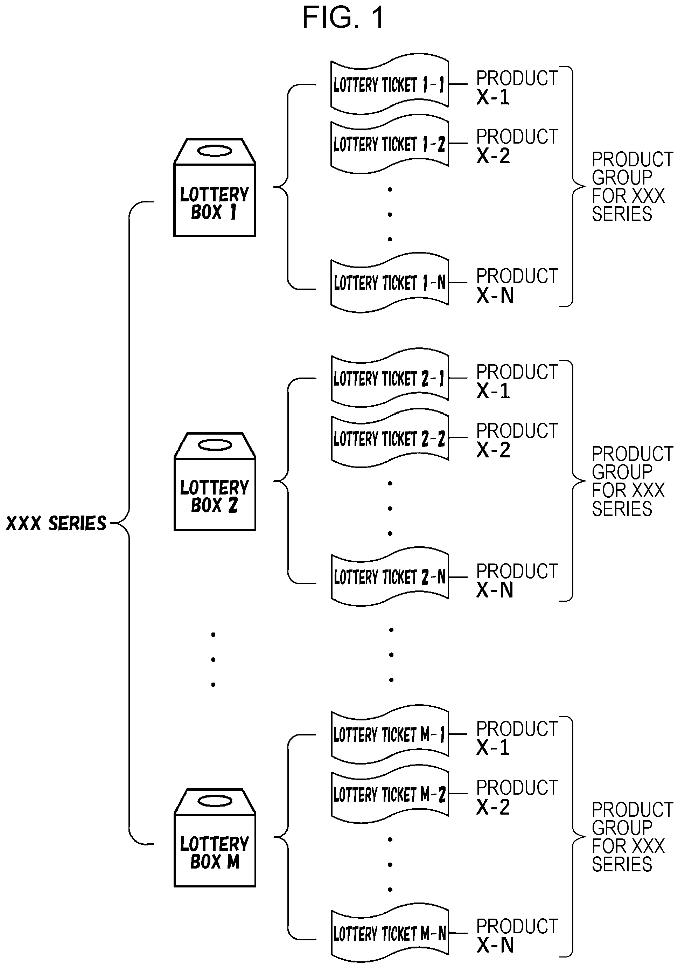

First, for easier understanding of a configuration in this embodiment, a product providing method applied to this embodiment will be described. Fig. 1 is a diagram for explaining a product providing method applied to this embodiment.

The product providing method applied to this embodiment is to provide, by a lottery, a product from among a plurality of types of products belonging to a title selected by a user. A title is, for example, the title of a character or an event.

One title is associated with a plurality of first type options and each of the plurality of first type options is associated with a plurality of second type options. Each of the first type options is associated with a corresponding product group associated with the title and including N items of products, the products belonging to P types. Each of the second type options associated with a first type option is associated with one product in a product group associated with the first type option.

To be more specific with reference to Fig. 1, first type options are lottery boxes, and second type options are lottery tickets stored in the lottery boxes. There is a title "XXX series" and each of lottery boxes 1 to M associated with the title "XXX series" is associated with a corresponding product group. The number of types of products belonging to each product group is represented by P, and the product group includes N items of products in total, the products belonging to the P types. The number of types of products and the number of items of products are the same between product groups. The ratio of the numbers of items of products belonging to a product group is determined based on prizes set for individual types of products. That is, the higher the prize tier of a product, the smaller the number of items of the product, and the lower the prize tier of a product, the larger the number of items of the product. For example, in the case where, in a product group of "XXX series", "product X-1" is set to the first prize, "product X-2" is set to the second prize, ..., and "product X-P" is set to the Pth prize, the probability of winning increases in the order of the "product X-1", the "product X-2", ..., and the "product X-P". That is, the "product X-1" has the lowest probability of winning and the number of items of the "product X-1" is the smallest. The "product X-P" has the highest probability of winning and the number of items of the "product X-P" is the largest.

Referring to Fig. 1, a case where M = 10, N = 100, and P = 5 will be described.

The title "XXX series" is associated with 10 lottery boxes 1 to 10, and each of the lottery boxes 1 to 10 is associated with 100 lottery tickets 1 to 100. There are five types of products, "product X-1", "product X-2", "product X-3", "product X-4", and "product X-5", in a product group associated with each of the lottery boxes 1 to 10. The first prize is the "product X-1", the second prize is the "product X-2", the third prize is the "product X-3", the fourth prize is the "product X-4", and the fifth prize is the "product X-5". The total number of items in the product group is 100, which is broken down as follows: 2 items of the "product X-1", 8 items of the "product X-2", 20 items of the "product X-3", 30 items of the "product X-4", and 40 items of the "product X-5". That is, a product group including 100 items of products of five types is associated with each of the lottery boxes 1 to 10.

Furthermore, each of the lottery tickets 1 to 100 in each of the lottery boxes 1 to 10 is associated with a corresponding one of 100 products in a product group associated with the lottery box. The lottery tickets 1 to 100 and the products are associated with each other on a one-to-one basis so that overlapping can be prevented. It is desirable that the lottery tickets 1 to 100 and the products are associated with each other in different manners between the lottery boxes 1 to 10. This is to prevent users from becoming aware of the correspondence between lottery tickets and products by selecting lottery tickets repeatedly.

Next, provision of products to users will be explained.

A user selects a title that they wish to purchase, and selects one of the lottery boxes 1 to 10 associated with the title. For example, when the user selects the lottery box 5, the user further selects a desired number of lottery tickets from among the lottery tickets 5-1 to 5-100 associated with the lottery box 5. Then, products associated with the lottery tickets selected by the user are provided. Accordingly, the products associated with the lottery tickets selected by the user become sold out. The lottery tickets selected by the user and for which the products are provided are prevented from being selected by other users.

Provision of a product associated with a title is implemented as described above by a lottery system in which a user makes a selection.

### Overall configuration

A product providing device system in this embodiment will be described.

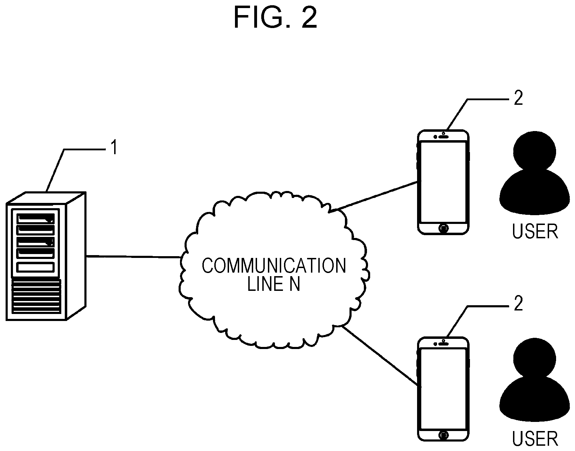

Fig. 2 is a schematic diagram of the product providing system according to this embodiment. In Fig. 2, reference numeral 1 represents a product providing device, and reference numeral 2 represents a terminal of a user.

The product providing device 1 and the terminal 2 of the user can connect to a communication line N and can communicate with each other. The communication line N represents a communication path that allows data communication. That is, the communication line N may be local area networks (LANs) such as a dedicated line (dedicated cable) for direct connection and Ethernet^{®} or communication networks such as a telephone communication network, a cable network, and the Internet, and a communication method may be wired or wireless.

The product providing device 1 is a server system including one or a plurality of server devices, storage devices, and the like. The product providing device 1 performs various services for providing products to users, acquires inventory statuses of products or other information, conducts a procedure for providing products to users, and performs other processes.

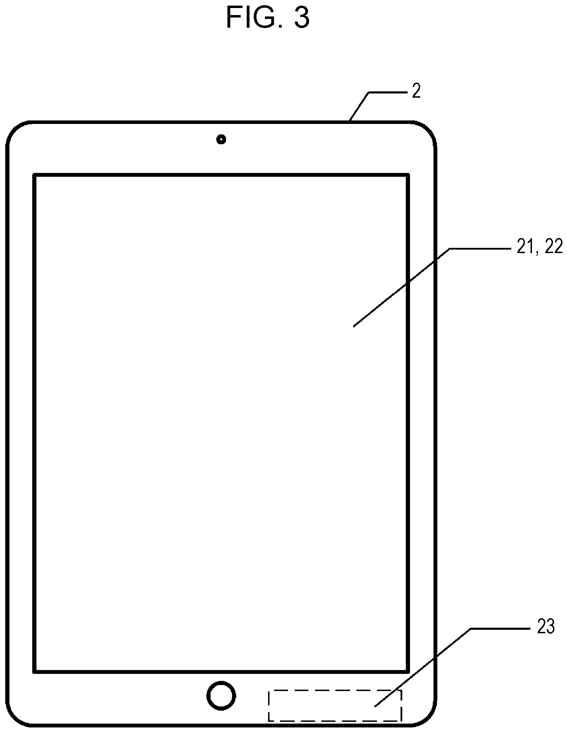

The terminal 2 is, for example, a personal computer, a tablet computer, a smartphone, a cellular phone, or the like. Fig. 3 is a diagram illustrating an example of the device configuration of a tablet computer as an example of the terminal 2. As illustrated in Fig. 3, the terminal 2 includes a display 21, a touch operation panel 22 configured integrally with the display 21, and a built-in speaker 23. Furthermore, a control board, a built-in battery, a power button, a volume control button, and the like, which are not illustrated in the drawing, are provided in the terminal 2.

On the control board, various microprocessors such as a central processing unit (CPU), a graphics processing unit (GPU), and a digital signal processor (DSP), various IC memories such as an application-specific integrated circuit (ASIC), a video random access memory (VRAM), a random access memory (RAM), and a read only memory (ROM), a wireless communication module for wireless communication with a base station, and other elements are mounted. Furthermore, a socalled interface circuit (I/F circuit), such as a driver circuit for the touch operation panel 22, and other elements are mounted on the control board. The elements mounted on the control board are electrically connected via bus circuits or other elements so that data writing/reading and signal transmission/reception can be performed.

In this embodiment, a product is provided to a user when the user pays a monetary consideration. A product is expressed as a tangible product or other things. For example, products include, but are not limited to, formed objects such as figures having the appearance of characters, clothing, plastic models, and accessories.

### Functional configuration

Configuration of each device will be described.

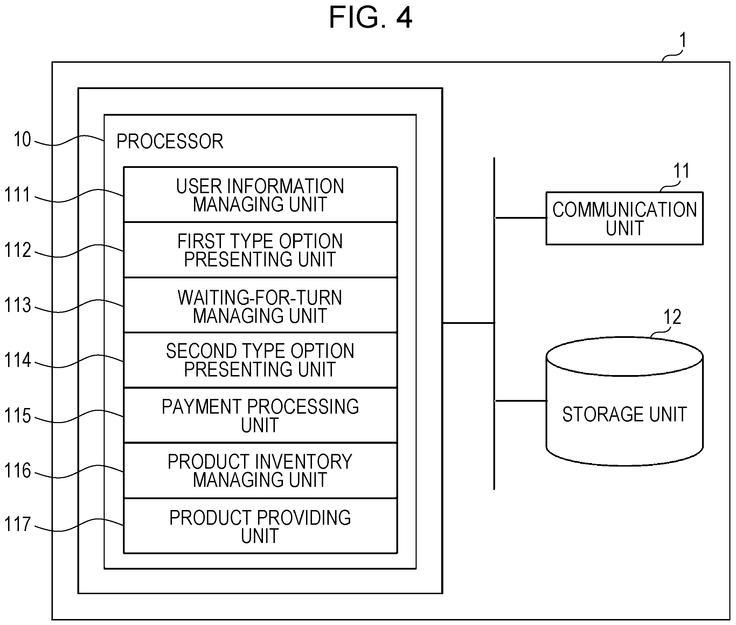

First, a configuration of the product providing device 1 will be described. Fig. 4 is a block diagram illustrating an example of the functional configuration of the product providing device 1.

The product providing device 1 includes, as illustrated in Fig. 4, a processor 10, a communication unit 11, and a storage unit 12.

The processor 10 comprehensively controls operation of the product providing device 1 on the basis of a program and data stored in the storage unit 12. A function of the processor 10 is implemented by, for example, a microprocessor such as a CPU or a GPU or an electronic component such as an ASIC or an IC memory. The processor 10 includes, as main functional units, a user information managing unit 111, a first type option presenting unit 112, a waiting-for-turn managing unit 113, a second type option presenting unit 114, a payment processing unit 115, a product inventory managing unit 116, and a product providing unit 117.

The user information managing unit 111 manages, using a user information database, information on a user. The information includes identification information (user ID) and a password of a user within a purchase service, personal information such as the name, address, and the like of the user, product purchase history information on the user, and the like.

The first type option presenting unit 112 references a lottery box database D1 and controls presentation of a plurality of first type options to the terminal 2.

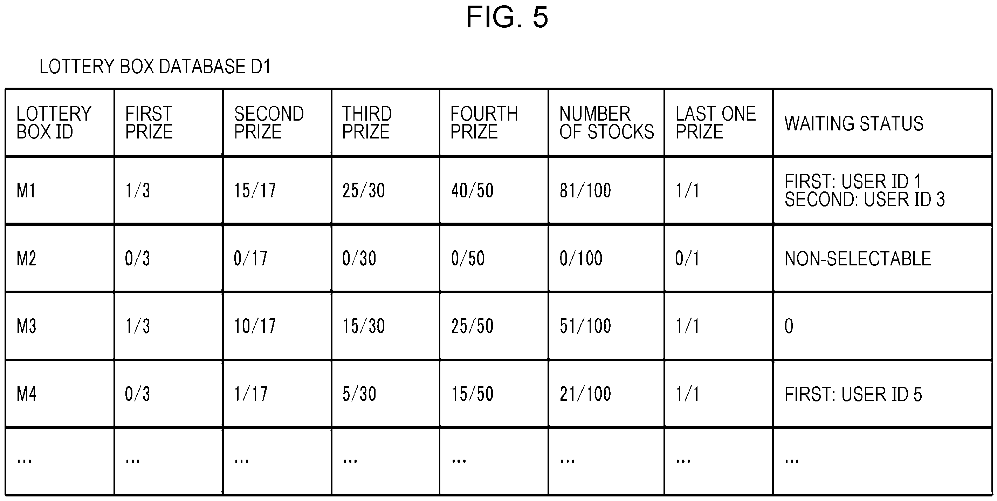

Fig. 5 is a diagram illustrating an example of the lottery box database D1. The lottery box database D1 includes, for each lottery box, a field for a lottery box ID (identification information), a field for the number of prizes (products) in stock included in the lottery box, a field for the total number of stocks in the lottery box, and a field for a waiting status. The field for the lottery box ID (identification information) is a field in which identification information for identifying the lottery box is written. The field for the number of prizes (products) in stock is a field in which the current number of stocks and the initial number of stocks are written. For example, information is written in the format of (the current number of stocks)/(the initial number of stocks). The field for the total number of stocks in the lottery box is a field in which the current total number of products in stock is written. A last one prize is a product provided to a user who purchases the last remaining product, and is thus not included in the total number of stocks. The field for the waiting status is a field in which the number of users who are waiting to draw from the lottery box. In the case where there is no waiting user, 0 is written. In the case where there is/are a waiting user/users, the number of waiting users is written. In the case where all the products in the lottery box are sold out and the total number of stocks is 0, "non-selectable" is written.

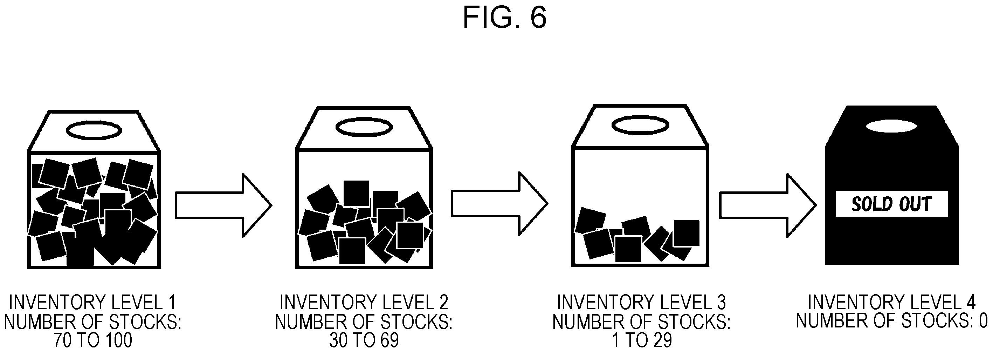

In this embodiment, first type options are lottery boxes. As first type options, lottery boxes each with an inventory level corresponding to the number of products in stock in the lottery box are presented. In this embodiment, there are four inventory levels. Fig. 6 is a diagram illustrating an example of lottery box images corresponding to inventory levels. In the example of Fig. 6, the inventory level for the case where the number of products in stock ranges from 70 to 100 is defined as inventory level 1, the inventory level for the case where the number of products in stock ranges from 30 to 69 is defined as inventory level 2, the inventory level for the case where the number of products in stock ranges from 1 to 29 is defined as inventory level 3, and the inventory level for the case where the number of products in stock is 0 (sold out) is defined as inventory level 4. The inventory levels 1 to 3 are expressed by images of lottery boxes representing the remaining amount of lottery tickets based on the corresponding levels. For the inventory level 4, an image of a lottery box with the indication of "sold out" is displayed.

The first type option presenting unit 112 acquires the number of stocks in each lottery box from the lottery box database D1 and presents a lottery box list screen including a plurality of lottery box images each with an inventory level corresponding to the number of stocks. The first type option presenting unit 112 also presents on the lottery box list screen the number of stocks and the number of waiting users for each lottery box from the lottery box database D1.

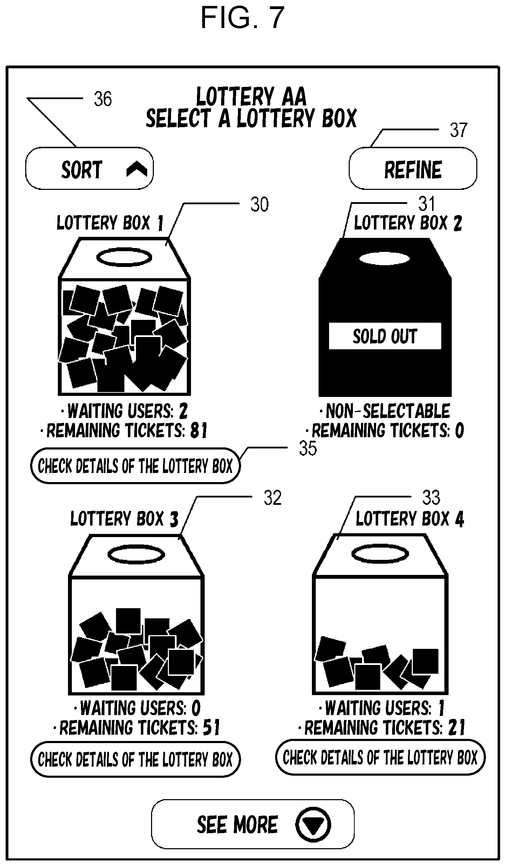

Fig. 7 is a diagram illustrating an example of the lottery box list screen presented by the first type option presenting unit 112. On the lottery box list screen in Fig. 7, a lottery box image 30 with the inventory level 1, a lottery box image 31 with the inventory level 4, a lottery box image 32 with the inventory level 2, and a lottery box image 33 with the inventory level 3 are displayed. Furthermore, below each of the lottery box images, the number of waiting users who are waiting to draw from the lottery box and the number of remaining lottery tickets (number of products in stock) are displayed. Moreover, a product inventory detail information button 35 for checking out specific product inventory detail information about the lottery box is also displayed.

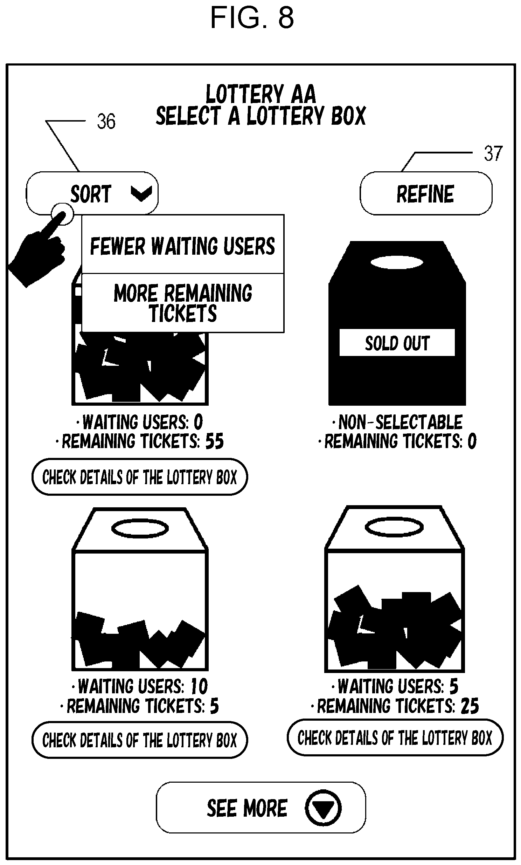

The first type option presenting unit 112 also has a function of sorting and searching lottery boxes. Fig. 8 is a diagram illustrating an example of the lottery box list screen presented by the first type option presenting unit 112. For example, on the lottery box list screen in Fig. 8, a sort button 36 and a refine button 37 are displayed. When a user selects the sort button 36, the first type option presenting unit 112 displays types of sorting. For example, in the case where "more remaining tickets" is selected, the first type option presenting unit 112 references the number of stocks in the lottery box database D1, sorts the lottery boxes in descending order of the number of stocks, from the largest to the smallest number of stocks, and presents the sorted lottery box images. In the case where "fewer waiting users" is selected, the first type option presenting unit 112 references the waiting status in the lottery box database D1, sorts the lottery boxes in ascending order of the number of waiting users, from the smallest to the largest number of waiting users, and presents the sorted lottery box images.

Furthermore, the first type option presenting unit 112 does not necessarily reference the lottery box database D1 in the manner described above but may use information in the lottery box database D1 for sorting and searching in a different manner as long as search can be made using information in the lottery box database D1. For example, a user may specify a prize as a search condition so that lottery boxes in which products for the prize exist can be searched for and the lottery boxes can be presented in descending order or ascending order of the number of stocks.

Furthermore, the first type option presenting unit 112 may present only lottery boxes that satisfy a search condition.

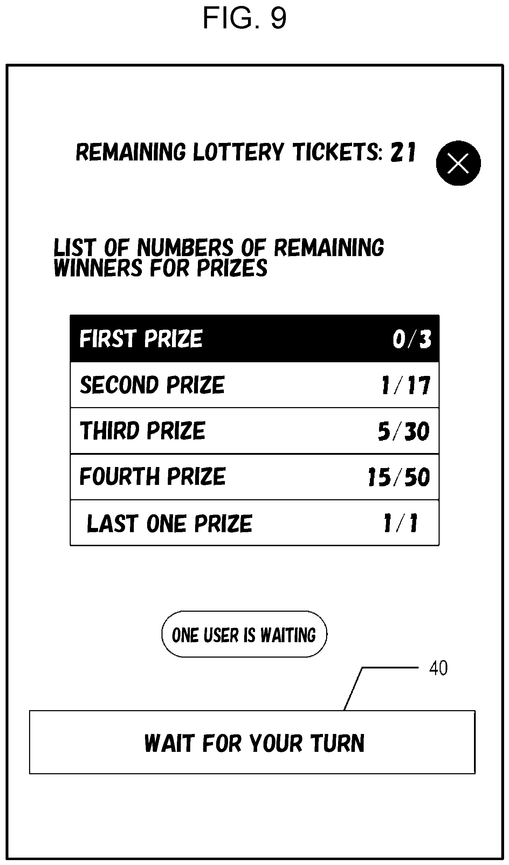

Furthermore, when a user selects the product inventory detail information button 35, the first type option presenting unit 112 displays product inventory detail information about the lottery box. Fig. 9 is a diagram illustrating an example of the product inventory detail information. The product inventory detail information in Fig. 9 is product inventory detail information for the case where the product inventory detail information button 35 for the lottery box image 33 on the lottery box list screen is selected. The first type option presenting unit 112 reads the number of stocks for each prize in the lottery box in the lottery box database D1, and the product inventory detail information is displayed. Furthermore, when the user selects a waiting-for-turn button 40, the first type option presenting unit 112 sends a notification to the waiting-for-turn managing unit 113.

When receiving the notification from the first type option presenting unit 112, the waiting-for-turn managing unit 113 references the waiting status in the lottery box database D1 to acquire the number of waiting users and also increases the number of waiting users by 1 in association with user identification information. User identification information and a place in the queue are updated in association with each other so that their place in the queue can be obtained for waiting for turn, which will be described later.

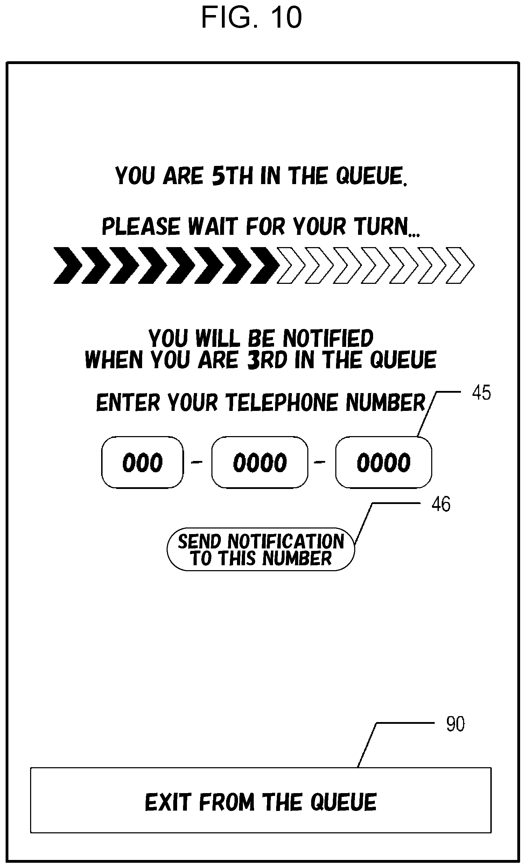

The waiting-for-turn managing unit 113 also maintains, based on the IP address and the MAC address of the terminal 2 of the user, identification information (user ID) of the user, and the like, the session between the terminal 2 of the user and the product providing device 1. The waiting-for-turn managing unit 113 presents a waiting-for-turn screen. The waiting-for-turn screen is a screen that presents, to a user who is waiting for their turn for a lottery, information about waiting for their turn for the lottery. Fig. 10 is a diagram illustrating an example of the waiting-for-turn screen. The waiting-for-turn screen in Fig. 10 displays the current number of waiting users. Furthermore, a gauge representing the time to elapse until a lottery is held is also displayed.

Furthermore, the waiting-for-turn managing unit 113 has a function of notifying, when the place in the queue of user identification information reaches a predetermined place in the queue, the user that their place has reached the predetermined place in the queue. When the place in the queue of user identification information reaches a predetermined place in the queue, the waiting-for-turn managing unit 113 sends a notification indicating that their place in the queue has reached the predetermined place in the queue to the point of contact of the user. The point of contact of the user is the telephone number, email address, account (user identification information) of a social networking service (SNS), or the like. The point of contact may be stored in advance as user information or may be input on the waiting-for-turn screen. In the example of the waiting-for-turn screen in Fig. 10, there is an input field 45 for entering the telephone number of the user, and the user enters the telephone number of the user into the input field 45. Then, the user selects an approve button 46. When the place in the queue of the user identification information reaches the predetermined place in the queue, the waiting-for-turn managing unit 113 sends a short message indicating that their place in the queue has reached the predetermined place in the queue to the telephone number.

Furthermore, the user is able to quit waiting for their turn for a lottery. The user can quit waiting for their turn by selecting a button 90 for exiting from the queue on the waiting-for-turn screen. When the button 90 for exiting from the queue is selected, the waiting-for-turn managing unit 113 deletes user identification information of the user who quits waiting for their turn from the waiting status in the lottery box database D1 and decreases the number of waiting users by 1. Then, the lottery box database D1 is updated in such a manner that the place in the queue of the user subsequent to the user who has quit waiting for their turn moves up.

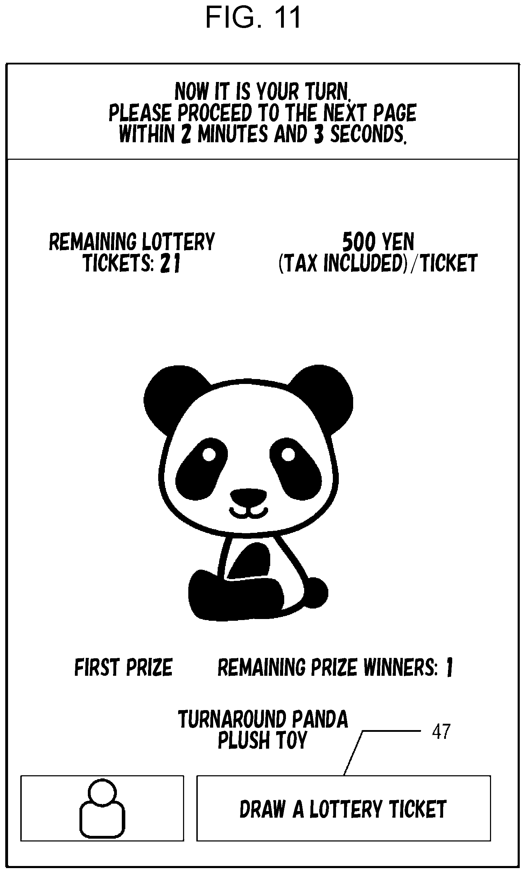

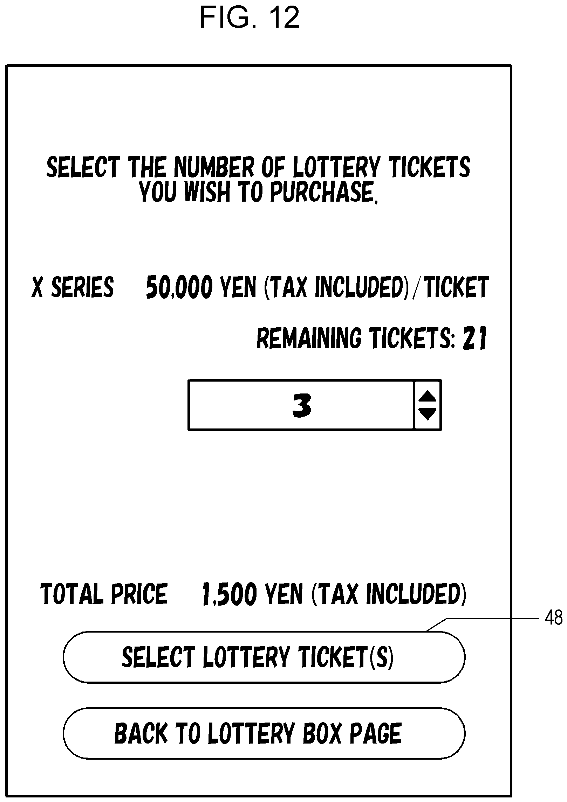

Furthermore, when the waiting-for-turn managing unit 113 references the waiting status in the lottery box database D1 and the turn of the user has arrived, a lottery ticket purchase confirmation screen is displayed. Fig. 11 is a diagram illustrating an example of the lottery ticket purchase confirmation screen. When a lottery ticket purchase confirmation button 47 on the lottery ticket purchase confirmation screen is selected, the waiting-for-turn managing unit 113 displays a number-of-lottery-tickets confirmation screen. Fig. 12 is a diagram illustrating an example of the number-of-lottery-tickets confirmation screen. When a lottery ticket selection button 48 is selected, the waiting-for-turn managing unit 113 sends a notification to the second type option presenting unit 114. In the case where there is no waiting user, the waiting-for-turn managing unit 113 directly displays the lottery ticket purchase confirmation screen.

If a user is allowed to be in a state in which a lottery box is selected for a long time, other users are not able to select the lottery box. Thus, the waiting-for-turn managing unit 113 measures a time T1 from selection of a lottery box to confirmation of purchase of a lottery ticket in the lottery box by a user. When the time T1 exceeds a predetermined time TX, the waiting-for-turn managing unit 113 forcibly cancels the selection of the lottery box, transitions the selection status to a selectable state, deletes the user identification information in the waiting status in the lottery box database D1, and decreases the number of waiting users by 1.

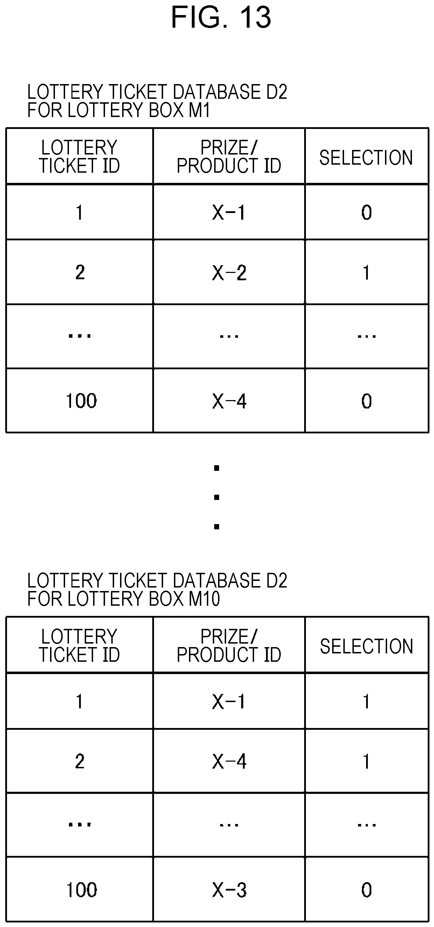

The second type option presenting unit 114 references a lottery ticket database D2 and presents a lottery ticket list screen including a plurality of second type options to the terminal 2. In this embodiment, the second type options are lottery tickets. Fig. 13 is a diagram illustrating an example of lottery ticket databases D2. Each of the lottery ticket databases D2 is, as illustrated in Fig. 13, associated with a lottery box and includes lottery ticket IDs (identification information), prize/product IDs (identification information) associated with the lottery ticket IDs, and selection status information about the lottery tickets. A prize/product ID is information for identifying a prize and a product for the prize. In the example of Fig. 13, "X-1" represents a product for the first prize of X series, "X-2" represents a product for the second prize of the X series, "X-3" represents a product for the third prize of the X series, and "X-4" represents a product for the fourth prize of the X series. The selection status information about a lottery ticket includes a selected state in which the lottery ticket has already been selected (opened) by a user and a product associated with the lottery ticket has been provided and a non-selected state in which a product associated with the lottery ticket has not been provided yet. In the case of the selected state, "1" is assigned. In the case of the non-selected state, "0" is assigned.

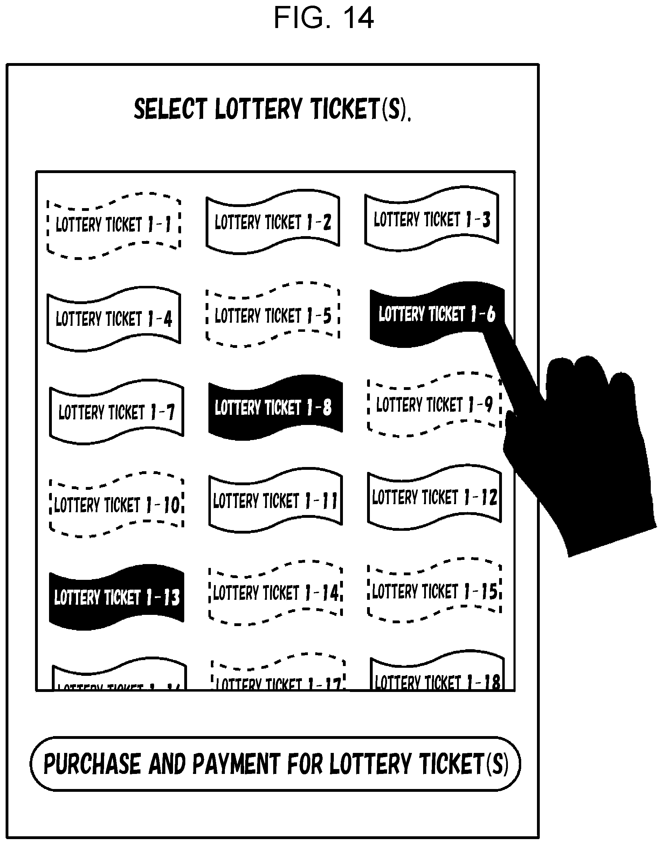

Fig. 14 illustrates an example of a lottery ticket list screen for the selected lottery box displayed on the terminal 2. On the lottery ticket list screen in Fig. 14, images of lottery tickets with lottery ticket IDs that have already been selected are expressed by dotted lines, and images of selectable lottery tickets are expressed by solid lines. A user is able to select the number of lottery tickets reserved for purchase from among the selectable lottery tickets.

After payment for the lottery ticket(s) selected by the user on the lottery ticket list screen is processed by the payment processing unit 115, the second type option presenting unit 114 updates selection status information corresponding to the lottery ticket ID(s) for the lottery ticket(s) in the lottery ticket database D2 to the selected state. The user is able to select the number of lottery tickets reserved for purchase.

Furthermore, if a user is allowed to be in a state in which a lottery ticket is selected for a long time, other users cannot select the corresponding lottery box. Thus, the second type option presenting unit 114 measures a time T2 from presentation of the lottery ticket list screen to completion of purchase and payment for a lottery ticket(s). When the time T2 exceeds a predetermined time TY, the second type option presenting unit 114 forcibly cancels selection of the lottery ticket(s) and also cancels selection of the corresponding lottery box. Then, the second type option presenting unit 114 deletes the user identification information in the waiting status in the lottery box database D1 and decreases the number of waiting users by 1.

In this embodiment, a lottery ticket (second type option) is selected by a user. However, a user may be able to select between manual selection and automatic selection. In the case where automatic selection is selected by the user, the second type option presenting unit 114 may automatically select, by a lottery, a lottery ticket (second type option) in the selectable state.

The payment processing unit 115 performs payment processing for a lottery ticket reserved for purchase. The payment processing is performed after selection of a lottery ticket is confirmed by the second type option presenting unit 114. After the payment processing by the payment processing unit 115 is completed, the second type option presenting unit 114 deletes the user identification information for which payment is completed from among a plurality of pieces of user identification information in the waiting status in the lottery box database D1 for the lottery box for which payment is completed, and decreases the number of waiting users by 1.

Upon completion of the payment by the payment processing unit 115, the product inventory managing unit 116 references the lottery ticket database D2, decreases the number of products in stock associated with non-selectable lottery tickets in the lottery box database D1, and thus updates the lottery box database D1. Accordingly, the lottery box database D1 reflects the latest inventory status.

As described above, since payment is performed after the type of a product associated with a selected lottery ticket is confirmed and the type of the product to be provided to a user is confirmed, the selection status of a corresponding lottery box can be transitioned from the selected state to the selectable state, without needing to wait for the time to be spent for effects, such as opening the lottery ticket, for provision of the product, which will be performed afterwards.

The product providing unit 117 presents a lottery ticket open screen. When a user selects a lottery ticket to be opened, the product providing unit 117 presents product information about a product associated with the opened lottery ticket. Furthermore, the product providing unit 117 performs a procedure for shipping the product to be provided to the user. As a shipping address, an address registered in the user information database is designated.

The communication unit 11 connects to the communication line N to implement communication.

In the storage unit 12, a system program and a function program are stored. The system program is a program for implementing a basic function as a computer of the product providing device 1. The function program is a program for causing the processor 10 to function as main functional units such as the user information managing unit 111, the first type option presenting unit 112, the waiting-for-turn managing unit 113, the second type option presenting unit 114, the payment processing unit 115, the product inventory managing unit 116, and the product providing unit 117. Furthermore, in the storage unit 12, the lottery box database D1 and the lottery ticket database D2 are also stored.

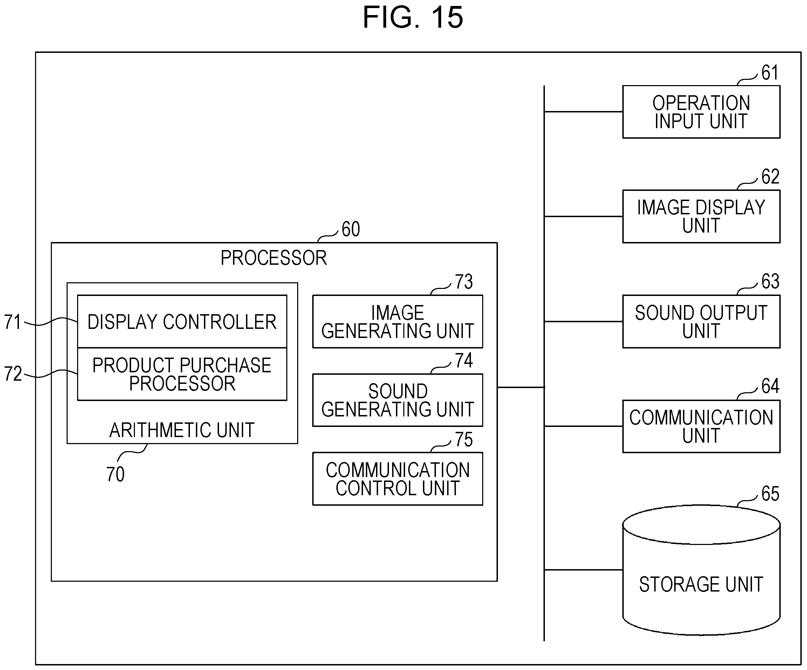

Next, a configuration of the terminal 2 will be described. Fig. 15 is a block diagram illustrating an example of the functional configuration of the terminal 2.

As illustrated in Fig. 15, the terminal 2 includes a processor 60, an operation input unit 61, an image display unit 62, a sound output unit 63, a communication unit 64, and a storage unit 65.

The processor 60 comprehensively controls operation of the terminal 2 on the basis of a program and data stored in the storage unit 65, an operation input signal from the operation input unit 61, and the like. A function of the processor 60 is implemented by, for example, microprocessors such as a CPU and a GPU and electronic components such as an ASIC and an IC memory. The processor 60 includes, as main functional units, an arithmetic unit 70, an image generating unit 73, a sound generating unit 74, and a communication control unit 75.

The arithmetic unit 70 performs various processes for purchasing a product 3 and performs output to the image generating unit 73, the sound generating unit 74, and the communication control unit 75. The arithmetic unit 70 includes a display controller 71 and a product purchase processor 72.

The display controller 71 performs, using information provided from the product providing device 1 and user operation information, display, effects, and the like on a product purchase screen for the product 3.

The product purchase processor 72 performs a procedure for purchasing a product. Specifically, the product purchase processor 72 performs, with the product providing device 1, a process for purchasing the product 3.

The operation input unit 61 is used by a user to input various operations and outputs an operation input signal corresponding to an operation input to the processor 60. A function of the operation input unit 61 is implemented by, for example, an element directly operated by a user's finger, such as a touch operation pad, a home button, a button switch, a joystick, or a track ball, an element for detecting motion and attitude, such as an acceleration sensor, an angular velocity sensor, a tilt sensor, or a geomagnetic sensor, or the like. In Fig. 2, the operation input unit 61 corresponds to the touch operation panel 22.

The image generating unit 73 generates an image per frame time (for example, 1/60 seconds) based on a processing result by the arithmetic unit 70, and outputs a generated image signal to the image display unit 62. A function of the image generating unit 73 is implemented by, for example, a processor such as a GPU or a digital signal processor (DSP), a video signal IC, a program such as a video codec, an IC memory for rendering frames such as a frame buffer, an IC memory used to expand texture data, or the like.

The sound generating unit 74 generates, based on a processing result by the arithmetic unit 70, an audio signal such as sound effects or various operation sounds, and outputs the audio signal to the sound output unit 63. A function of the sound generating unit 74 is implemented by, for example, a processor such as a digital signal processor (DSP) or a sound synthesis IC, an audio codec capable of reproducing an audio file, or the like.

The communication control unit 75 performs communication connection and data processing for data communication with the product providing device 1.

The image display unit 62 displays, based on an image signal input from the image generating unit 73, a screen. A function of the image display unit 62 is implemented by, for example, a display device such as a flat panel display, a cathode-ray tube (CRT), a projector, or a head-mount display. In Fig. 2, the image display unit 62 corresponds to the display 21.

The sound output unit 63 is used to output, based on an audio signal input from the sound generating unit 74, sound effects or the like. In Fig. 2, the sound output unit 63 corresponds to the speaker 23.

The communication unit 64 connects to the communication line N to implement communication. A function of the communication unit 64 is implemented by, for example, a wireless communication device, a modem, a terminal adaptor (TA), a cable jack for wired communication, or a control circuit.

In the storage unit 65, a program for causing the terminal 2 to operate and implementing various functions of the terminal 2, data to be used during execution of the program, and the like are stored in advance or temporarily stored every time processing is performed. The storage unit 65 is implemented by, for example, a RAM, a ROM, an IC memory such as a flash memory, a magnetic disk such as a hard disk, an optical disc such as a compact disc-read only memory (CD-ROM) or a digital video disc (DVD), or the like. Specifically, in the storage unit 65, a system program and a control program for controlling the processing for purchasing the item (product) 3 by the terminal 2 are stored. The system program is a program for implementing a basic function of the terminal 2 as a computer. The control program is a program for causing the processor 60 to function as the arithmetic unit 70.

### Explanation of operation

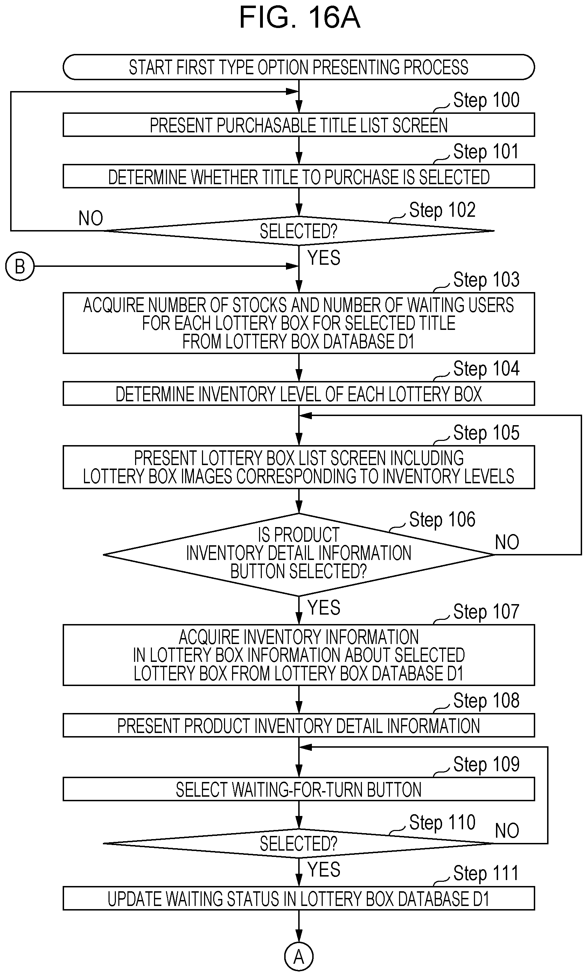

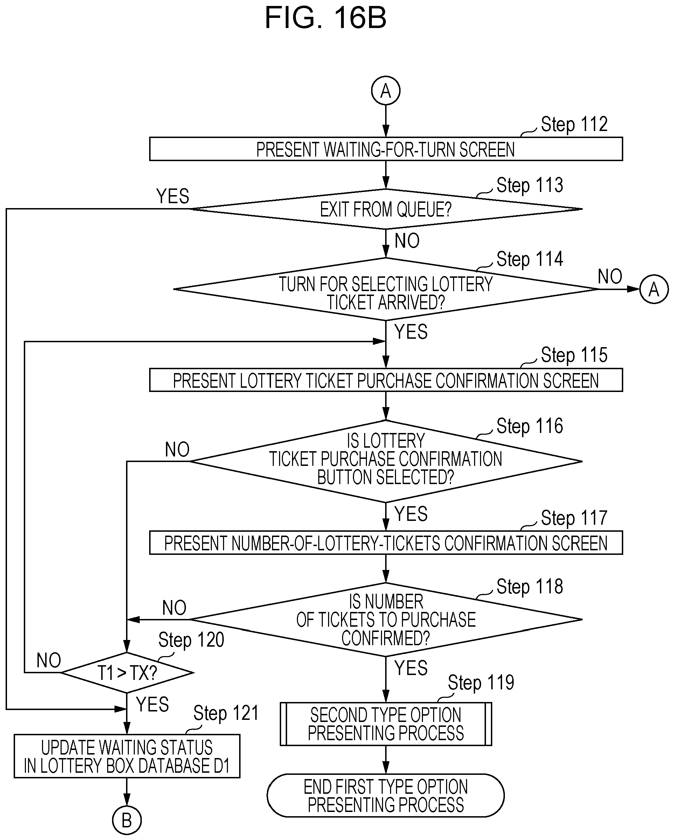

An operation of the product providing system according to this embodiment will be described focusing on an operation of the product providing device 1. Figs. 16A and 16B are operation flowcharts of a first type option presenting process of the product providing device 1.

First, a user uses the terminal 2 to access the product providing device 1 and requests the product providing device 1 for a product purchase screen.

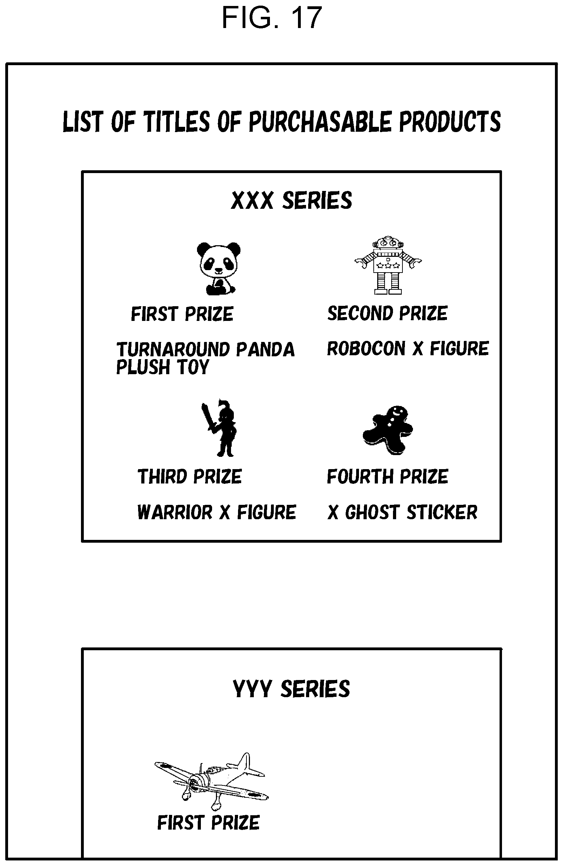

The first type option presenting unit 112 of the product providing device 1 receives the request for the product purchase screen and presents a purchasable title list screen to the terminal 2 (Step 100). Fig. 17 illustrates an example of a purchasable title list screen presented to the terminal 2. On the purchasable title list screen, explanation for types of products belonging to a product group associated with each title is also displayed. The user selects a title that they wish to purchase. In this example, the user selects a title "XXX series".

When the title is selected (Steps 101 and 102), the first type option presenting unit 112 acquires the number of stocks and the number of waiting users for each lottery box from the lottery box database D1 for the selected title (Step 103). Then, the first type option presenting unit 112 determines, based on the number of stocks in each lottery box, the inventory level of the lottery box (Step 104), and presents a lottery box list screen including a plurality of lottery box images corresponding to the inventory levels, as illustrated in Fig. 7 (Step 105).

When the product inventory detail information button 35 is selected by the user (Step 106), the first type option presenting unit 112 acquires inventory information (the number of items in stock for each prize) in the lottery box database D1 for the selected lottery box (Step 107), and displays product inventory detail information about the lottery box (Step 108), as illustrated in Fig. 9.

When the waiting-for-turn button 40 is selected by the user (Steps 109 and 110), the waiting-for-turn managing unit 113 references the waiting status in the lottery box database D1 to acquire the number of waiting users, increases the number of waiting users by 1 in association with the user identification information, and thus updates the lottery box database D1 (Step 111). Then, the waiting-for-turn managing unit 113 presents a waiting-for-turn screen, as illustrated in Fig. 10 (Step 112).

When the place in the queue corresponding to the user identification information reaches a predetermined place in the queue (Step 114), the waiting-for-turn managing unit 113 references the waiting status in the lottery box database D1, and presents a lottery ticket purchase confirmation screen, as illustrated in Fig. 11 (Step 115). In contrast, if the user quits waiting for their turn (Step 113), the waiting-for-turn managing unit 113 updates the waiting status in the lottery box database D1 (Step 121), and the process proceeds to Step 103.

When the lottery ticket purchase confirmation button 47 on the lottery ticket purchase confirmation screen is selected (Step 116), the waiting-for-turn managing unit 113 presents a number-of-lottery-tickets confirmation screen, as illustrated in Fig. 12 (Step 117).

When the number of lottery tickets is confirmed on the number-of-lottery-tickets confirmation screen (Step 118), a second type option presenting process is performed (Step 119).

The waiting-for-turn managing unit 113 measures the time T1 from presentation of the lottery ticket purchase confirmation screen, and when the time T1 until confirmation of the number of lottery tickets to purchase exceeds the predetermined time TX (Step 120), the waiting-for-turn managing unit 113 forcibly cancels the selection of the lottery box, transitions the selection status to the selectable state, deletes the user identification information in the waiting status in the lottery box database D1, decreases the number of waiting users by 1, and thus updates the lottery box database D1 (Step 121).

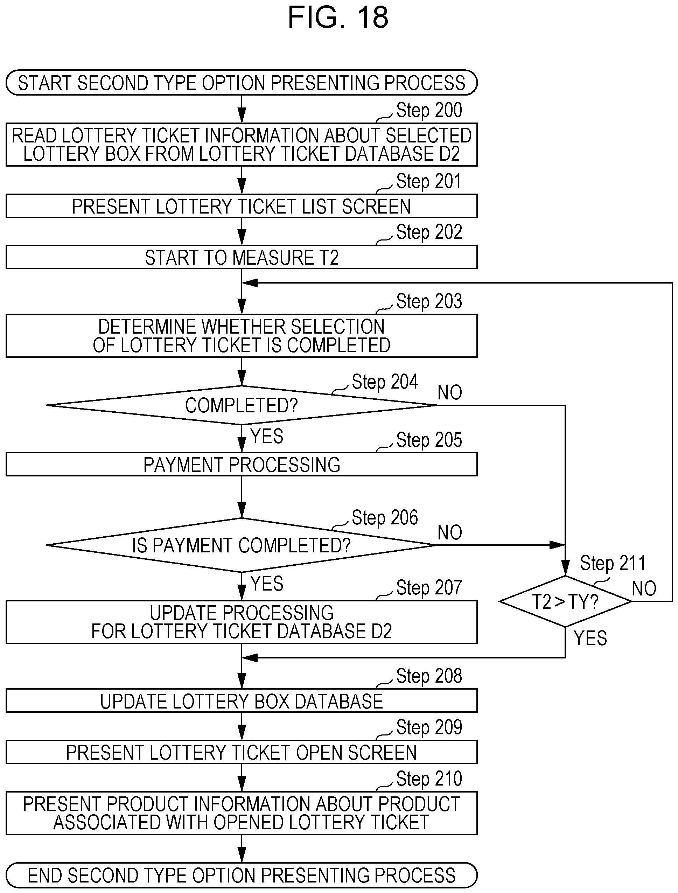

Next, the second type option presenting process will be described. Fig. 18 is an operation flowchart of the second type option presenting process of the product providing device 1.

First, the second type option presenting unit 114 reads lottery ticket information about the selected lottery box from the lottery ticket database D2 (Step 200). The read lottery ticket information includes lottery ticket IDs and selection information. Then, the second type option presenting unit 114 presents a lottery ticket list screen to the terminal 2 (Step 201), as illustrated in Fig. 14.

The second type option presenting unit 114 presents the lottery ticket list screen to the terminal 2, and starts to measure the time T2 (Step 202). The time T2 represents a time from presentation of the lottery ticket list screen to completion of payment for purchase of a lottery ticket(s). The user is able to select the number of lottery tickets reserved for purchase from among the selectable lottery tickets.

Then, the second type option presenting unit 114 determines whether or not selection of a lottery ticket(s) is completed on the lottery ticket list screen (Step 203). In the case where selection of a lottery ticket(s) is not completed (Step 204), the second type option presenting unit 114 determines whether or not the time T2 exceeds the predetermined time TY (Step 211). In the case where the time T2 exceeds the predetermined time TY, the second type option presenting unit 114 cancels the state in which the selected lottery box is monopolized and updates the waiting status in the lottery box database D1 (Step 208).

In contrast, in the case where selection of a lottery ticket(s) by the user is completed (Step 204), the payment processing unit 115 performs processing for payment for purchase of the lottery ticket(s) (Step 205). When the payment processing is completed (Step 206), the second type option presenting unit 114 adds a flag "1" to the selection information of the lottery ticket ID(s) for the lottery ticket(s) for which selection is completed, and thus updates the lottery ticket database D2 (Step 207). Furthermore, the second type option presenting unit 114 deletes the user ID in the lottery box database D1 for the selected lottery box, and thus updates the lottery box database D1 (Step 208).

Accordingly, the lottery box that is in the selected state due to selection by the user is changed to the selectable state in which the lottery box is selectable by other users, so that other users are able to select the lottery box. Furthermore, at the time of payment, the selected lottery ticket is confirmed and a product associated with the lottery ticket is also confirmed. Therefore, accurate information about the remaining lottery tickets and products can be provided to the next user who will select the lottery box, and a situation in which an already selected lottery ticket is selected by another user does not occur.

In contrast, in the case where the payment processing of the payment processing unit 115 is not completed (Step 206), the second type option presenting unit 114 determines whether or not the time T2 exceeds the predetermined time TY (Step 211). In the case where the time T2 exceeds the time TY, the second type option presenting unit 114 deletes the user ID in the lottery box database D1 for the selected lottery box, and thus updates the lottery box database D1 (Step 208).

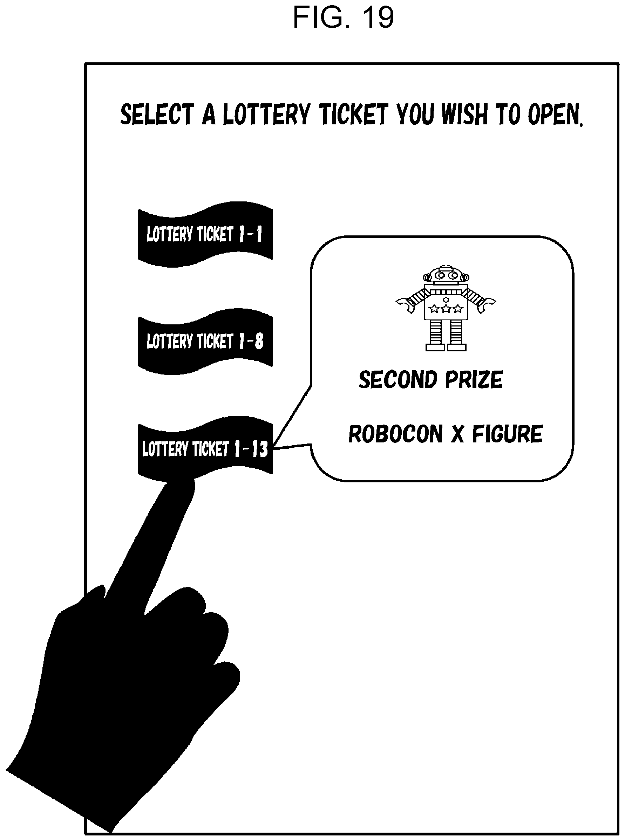

When the payment processing of the payment processing unit 115 is completed (Step 206), the product providing unit 117 presents a lottery ticket open screen (Step 209), and presents product information about a product(s) associated with the opened lottery ticket(s) (Step 210). Fig. 19 illustrates an example of the lottery ticket open screen displayed on the terminal 2. By selecting a lottery ticket to be opened, the user is able to browse product information about the product associated with the lottery ticket.

The product providing method applied to this embodiment is a method for providing a product using a lottery box system. Therefore, a user wishes to find out about how many lottery tickets (products) are left in a lottery box. In this embodiment, the inventory level of a product group associated with a lottery box is presented as a lottery box image. Thus, the user is able to easily find out how much product inventory is in the lottery box.

Furthermore, since detailed inventory information about products in a lottery box can be easily confirmed, information useful for a user to select a lottery box can be provided.

Furthermore, in this embodiment, the order in which lottery boxes are presented can be rearranged based on inventory information, the number of waiting users, and the like of lottery boxes. Therefore, a user is able to easily browse the lottery boxes.

Furthermore, the product providing method applied to this embodiment is a method for providing a product using a lottery box system. Therefore, a lottery box needs to be selected by only a single user. On the other hand, a situation in which selection of a lottery box is monopolized by a single user is not desirable. In this embodiment, a lottery box can be selected by only a single user. In addition, after selection of a lottery ticket by the user is completed, payment for purchase of the lottery ticket is performed, and after that, an operation for opening the lottery ticket is performed. Therefore, the time required to maintain selection of the lottery box for the single user can be shortened.

Furthermore, since one product is associated with a selected lottery ticket, accurate information about the remaining lottery tickets and products can be informed to the next user who will select the lottery box, and overlapping provision of products can be prevented.

In this embodiment, an example in which a plurality of first type options (lottery boxes) are used has been described. However, a plurality of first type options (lottery boxes) are not necessarily provided. Even in the case where a single first type option (lottery box) is used, similar effects can be achieved as long as the first type option (lottery box) is selectable by only a single user, a plurality of second type options (lottery tickets) are associated with the first type option (lottery box), and the second type options (lottery tickets) are associated on a one-to-one basis with products in a product group for the first type option (lottery box), as in this embodiment. That is, the time required to maintain selection of a lottery box for a single user can be shortened, and overlapping provision of products can be prevented.

Furthermore, a lottery box image corresponding to an inventory level is not necessarily an image representing the remaining amount of lottery tickets but may be expressed in other ways such as using a gauge as long as the inventory level is recognizable.

### Modification 1 of embodiment of present invention

A modification of the embodiment of the present invention will be described.

In the embodiment described above, a user is able to confirm which prize (product) is still left in each lottery box by browsing inventory detail information about the lottery box. However, it would be more useful for the user if they can find out, for the whole title, which prize is still left, at the time when the title screen is presented.

Thus, at the time when presenting the title screen, the first type option presenting unit 112 displays the list of prizes in such a manner that a prize that is sold out (out of stock) is distinguishable from the other prizes. At the time when presenting a title, the first type option presenting unit 112 references the lottery box database D1 and searches all the lottery boxes for prizes that are out of stock. For example, in the case where the inventory for the third prize is 0 in all the lottery boxes on the lottery box database D1, the third prize for the title is sold out (out of stock).

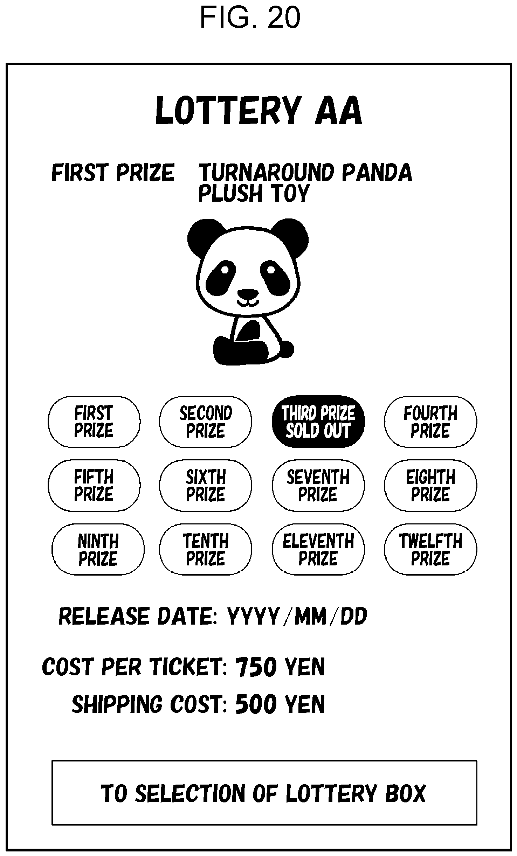

At the time when presenting a title, the first type option presenting unit 112 presents, based on acquired inventory information, the list of prizes. Fig. 20 illustrates an example of the list of prizes displayed when a title is presented. In Fig. 20, a case where the third prize is sold out (out of stock) is illustrated. The specific number of stocks may be presented for each prize.

With the configuration described above, the user is able to find out, at the time when the title screen is presented, which prize is still left, and knowing which prize is still left is also convenient when selecting a lottery box for the title.

Although the preferred embodiments of the present invention have been described above, the present invention is not necessarily limited to the embodiments described above. Various changes may be made within the scope of the technical idea of the present invention.

Furthermore, part of or all the embodiments described above can also be described as in the appendices provided below but are not limited thereto.

### [Appendix 1]

A product providing device capable of communicating with a terminal of a user, the product providing device comprising:
inventory managing means for managing inventory statuses of products in a product group including a plurality of types of products;
option presenting means for presenting to the terminal a plurality of options associated with the product group in such a manner that the user is able to select an option; and
product providing means for providing, by a lottery, a product from the product group associated with the option,
wherein the option presenting means searches for, based on the inventory statuses of the products, an option that satisfies a search condition, and presents the option that satisfies the search condition.

### [Appendix 2]

The product providing device according to Appendix 1, wherein the option presenting means sorts and presents the options in an order in which the search condition is satisfied.

### [Appendix 3]

The product providing device according to Appendix 1 or 2, wherein the search condition is at least one of the total number of stocks in the product group associated with the option and the number of stocks of each product in the product group associated with the option.

### [Appendix 4]

The product providing device according to any one of Appendices 1 to 3,
wherein a prize is allocated to a product in the product group according to the type of the product, and
wherein the search condition is the number of stocks of each prize.

### [Appendix 5]

The product providing device according to any one of Appendices 1 to 4, wherein the option presenting means causes the option to be monopolized by one user during a period of time from execution of a lottery of a product in the product group associated with the option to confirmation of the product and causes other users to have to wait to select the monopolized option during the period of time in which the option is monopolized.

### [Appendix 6]

The product providing device according to any one of Appendices 1 to 5, wherein the search condition is the number of users waiting to select the option.

### [Appendix 7]

The product providing device according to any one of Appendices 1 to 6, wherein the option presenting means presents predetermined search conditions in a selectable manner.

### [Appendix 8]

The product providing device according to any one of Appendices 1 to 7, wherein the option presenting means presents only the option that satisfies the search condition.

### [Appendix 9]

The product providing device according to any one of Appendices 1 to 8, wherein the option presenting means presents an option including an inventory status image of an inventory level representing the total number of stocks in the product group associated with the option.

### [Appendix 10]

The product providing device according to any one of Appendices 1 to 9, wherein the option is an image imitating a lottery box.

### [Appendix 11]

A program for causing a computer to function as:
inventory managing means for managing inventory statuses of products in a product group including a plurality of types of products;
option presenting means for presenting to a terminal a plurality of options associated with the product group in such a manner that a user is able to select an option; and
product providing means for providing, by a lottery, a product from the product group associated with the option,
wherein the option presenting means searches for, based on the inventory statuses of the products, an option that satisfies a search condition, and presents the option that satisfies the search condition.

### [Appendix 12]

A product providing system including a terminal of a user and a product providing device, the product providing system comprising:
inventory managing means for managing inventory statuses of products in a product group including a plurality of types of products;
option presenting means for presenting to the terminal a plurality of options associated with the product group in such a manner that the user is able to select an option; and
product providing means for providing, by a lottery, a product from the product group associated with the option, wherein the option presenting means searches for, based on
the inventory statuses of the products, an option that satisfies a search condition, and presents the option that satisfies the search condition.

## Claims

1. A product providing device (1) capable of communicating with a terminal (2) of a user, the product providing device (1) comprising:
inventory managing means (116) for managing inventory statuses of products in a product group including a plurality of types of products;
option presenting means (112) for presenting to the terminal (2) a plurality of options associated with the product group in such a manner that the user is able to select an option; and
product providing means (117) for providing, by a lottery, a product from the product group associated with the option,
wherein the option presenting means (112) searches for, based on the inventory statuses of the products, an option that satisfies a search condition, and presents the option that satisfies the search condition.

2. The product providing device (1) according to Claim 1, wherein the option presenting means (112) sorts and presents the options in an order in which the search condition is satisfied.

3. The product providing device (1) according to Claim 1 or 2, wherein the search condition is at least one of the total number of stocks in the product group associated with the option and the number of stocks of each product in the product group associated with the option.

4. The product providing device (1) according to Claim 3, wherein a prize is allocated to a product in the product group according to the type of the product, and the search condition is the number of stocks of each prize.

5. The product providing device (1) according to Claim 3, wherein the option presenting means (112) causes the option to be monopolized by one user during a period of time from execution of a lottery of a product in the product group associated with the option to confirmation of the product and causes other users to have to wait to select the monopolized option during the period of time in which the option is monopolized.

6. The product providing device (1) according to Claim 5, wherein the search condition is the number of users waiting to select the option.

7. The product providing device (1) according to Claim 3, wherein the option presenting means (112) presents predetermined search conditions in a selectable manner.

8. The product providing device (1) according to Claim 3, wherein the option presenting means (112) presents only the option that satisfies the search condition.

9. The product providing device (1) according to Claim 1, wherein the option presenting means (112) presents an option including an inventory status image of an inventory level representing the total number of stocks in the product group associated with the option.

10. The product providing device (1) according to Claim 1, wherein the option is an image imitating a lottery box.

11. A computer program product comprising instructions which, when executed by a computer, cause the computer to:
manage inventory statuses of products in a product group including a plurality of types of products;
present to a terminal (2) a plurality of options associated with the product group in such a manner that a user is able to select an option; and
provide, by a lottery, a product from the product group associated with the option,
wherein the instructions are further configured to cause the computer to search for an option that satisfies a search condition, and presents the option that satisfies the search condition based on the inventory statuses of the products.

12. A product providing system including a terminal (2) of a user and a product providing device (1) according to any one of claims 1-10.
